# EUROPEAN PATENT SPECIFICATION

(11) **EP 1 679 996 B1**
(45) Date of publication and mention of the grant of the patent: **12.09.2007**
(21) Application number: 04793810.5
(22) Date of filing: 20.10.2004
(51) Int. Cl.: A47F 1/12, A47F 5/00, B65G 1/06

(54) **SHELF DEVICE**
REGALVORRICHTUNG
DISPOSITIF D'ETAGERE

(30) Priority: 06.11.2003 SE 0302928
(43) Date of publication of application: 19.07.2006
(73) Proprietor: Easy-Link AB, 136 72 Haninge (SE)
(72) Inventor: SOLENBERG, Jan, S-136 72 Haninge (SE); SOLENBERG, Fredrik, S-136 72 Haninge (SE); SOLENBERG, Johan, S-136 71 Haninge (SE)
(74) Representative: Platt, Timothy Nathaniel
(86) International application number: PCT/SE2004/001507
(87) International publication number: WO 2005/044057

(56) References cited:
- EP-A1- 0 913 347
- EP-A2- 0 481 969
- WO-A1-96/29919
- WO-A1-99/40822
- US-A- 3 881 633

## Description

### FIELD OF THE INVENTION

The present invention relates to a shelf device for display and forward feed of products.

### BACKGROUND OF THE INVENTION

When displaying everyday commodities in stores it is important, for a number of reasons, that the products be continually fed forward to the front row on the shelves. The primary reason is to prevent older products from being left far back on the shelves, but it has also been shown that full rows of products make a better impression on the customer. It is also reasonable to assume that increased exposure will result in increased sales. A large portion of the working day for convenience store personnel is devoted to moving products forward on the shelves.

To address this problem, shelf devices have been developed for automatic forward feed of products. Such a shelf device is described in EP 0 603 140, where photocells are used to detect when the entire front row of products has been removed from the shelf. A motor is then activated which drives a conventional conveyor belt on which the products are placed so that the row behind the previous front row is advanced to the forwardmost portion of the shelf.

A similar shelf device is disclosed in WO-A-9940822.

The disadvantages of the shelf device according to EP 0 603 140 are numerous. Firstly, for structural reasons, such a shelf device will be both heavier and larger than current product shelves. This means that existing supporting frames for these shelves cannot be used to support the new shelf devices. New frames must therefore be manufactured, which will be relatively expensive due to the greater dimensions and required materials. Furthermore, this device will not achieve continuous refilling of the first row of products, with the result being that there will almost always be gaps therein, and no consideration is given to the fact that customers can take products from the back rows.

DE 3 118 595 A1 describes a device for forward feed of loaves of bread placed on a conveyor belt. This conveyor belt is also motor-driven. The motor is activated when a door, through which bread loaves are removed by the customer, is closed. When the next loaf has assumed the forwardmost position, the motor is automatically shut off.

This device is particularly bulky and heavy and is thus impossible to combine with existing frames. Furthermore, the products in the device are placed in an elongated column, making it impossible for the customer to remove any other product than the forward most. This is particularly disadvantageous if the forwardmost product should be defective, for example.

### THE PURPOSE OF THE INVENTION

The purpose of the present invention is to achieve a shelf device which does not have the above described disadvantages.

### SUMMARY OF THE INVENTION

The purpose of the present invention is achieved with a shelf device according to independent claims 1 and 9. The shelf device according to claim 1 is made to display and forward feed products and comprises an endless feeder belt arranged about at least one drive element and at least one support means, and on which the products can be placed. The shelf device is characterized in that the shelf device comprises at least a pneumatic or hydraulic drive means for stepped driving of the drive element, said drive means comprising a cylinder connected to a fluid source via a fluid connection, and a piston reciprocally disposed at least partially inside the cylinder, said piston being so joined to the drive element via at least a linkage arm, and a ratchet mechanism articulated thereto, that a piston movement in at least one direction causes a drive element to rotate and thus drive the feeder belt.

By utilizing a hydraulic and pneumatic drive means instead of an electric motor and by virtue of the fact that the fluid source can be placed at a distance from the shelf device, a more convenient design of lower weight is achieved. The lower weight makes it possible to enable the shelf device to be mounted on existing supporting frames.

The shelf device comprises with advantage two linkage arms, each with a respective articulated ratchet mechanism, where one linkage arm and its ratchet mechanism cause the drive element to rotate upon an outward piston movement relative to the cylinder, while the other linkage arm and its ratchet mechanism cause the drive element to rotate upon a retracting piston movement relative to the cylinder. Such a design provides a more rapid forward feed and more efficient utilisation of the fluid which is pumped in the cylinder.

It is also advantageous if the feeder belt can be driven in two opposite directions, making it possible for simple filling of products on the feeder belt.

It is advantageous if the drive rollers provided with teeth engaging the feeder belt for driving it forward. This means that the feeder belt will not need to be tensioned around the drive roller and the support means. This will reduce the load on the drive roller and dimensional requirements. This will make it possible to use a smaller and lighter shelf device, which can be mounted in existing frames.

For the same reasons it is advantageous if the feeder belt is a module belt since these are particularly well-suited to be driven by a toothed driving roller.

The feeder belt is preferably provided at its forward end with a abutment which prevents the products from falling off when being advanced by the feeder belt. It is also advantageous to make it of a low-friction material, making it possible for the products placed thereon to slip on the feeder belt. When the products are fed forward by the feeder belt, they will eventually encounter an obstacle, either in the form of the abutment or in the form of another product. In order to avoid damage to the products, it is thus an advantage if the feeder belt can slip relatively simply thereunder.

It is of particular advantage if the shelf device comprises at least one detecting device for detecting an attempt to remove a product disposed on the feeder belt. The detecting device emits an activation signal to a control unit, which activates the fluid source. With such a design, no personnel is required to see to it that the front row on the shelf is always filled. Rather this will happen automatically by means of the present shelf device. It is advantageous that the control unit deactivates the fluid source after a predetermined period of time, counting from the activation thereof, particularly to avoid unnecessary wear on the products.

The shelf device according to claim 9 is designed to display and feed forward products and comprises an endless feeder belt arranged about at least one drive element and at least one support means, and on which the products can be placed in a manner which permits removal of several thereof, the drive element being driven by means of a drive means. The shelf device is characterized by at least one control unit coupled to the drive means, and a detecting means, the control unit activating the drive means upon reception of an activation signal from the detecting means, and said detecting means emitting an activation signal to the control unit upon an attempt to remove a product disposed on the feeder belt.

Such a design is advantageous since it makes possible continuous and automatic forward feed of products as they are removed from the feeder belt. No gaps need appear.

### SHORT DESCRIPTION OF THE DRAWINGS

The invention will be described in more detail below with reference to the accompanying drawings, of which:
Fig. 1 shows a perspective view of a shelf device according to the present invention;
Figs. 2 and 3 show side views of a first preferred embodiment of a drive means for a feeder belt in a shelf device according to the present invention;
Figs. 4 and 5 show side views of a second preferred embodiment of the drive means according to the present invention;
Fig. 6 shows a view from above of the shelf device according to claim 1 provided with two drive means;
Fig. 7 shows a perspective view of the shelf device according to Fig. 1 provided with dividers; and
Figs. 8 and 9 show detailed views of a ratchet mechanism of a third preferred embodiment of the drive means according to the present invention.

### DETAILED DESCRIPTION

The shelf device according to the present invention is primarily intended to be used as a shelf for everyday commodities with high turnover, which necessitates continuous forward feed of the products to avoid gaps in the front row of products. The products are placed on the shelf in at least one column consisting of a number of rows of products.

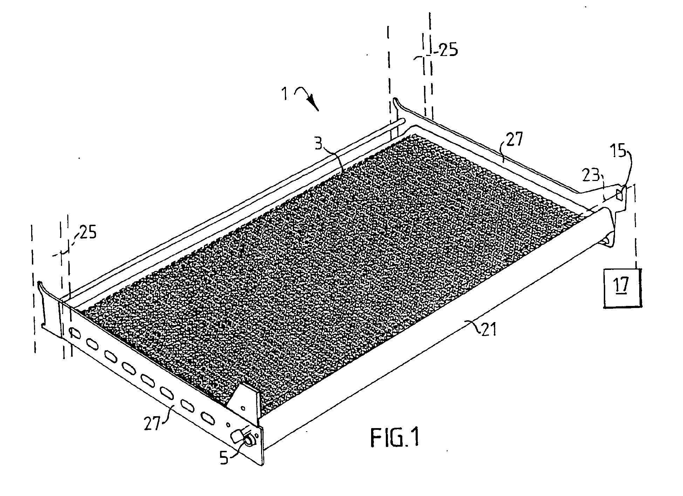

The shelf device 1 according to the present invention comprises, as can be seen in Figs. 1-5, an endless feeder belt 3 disposed about a drive element 5 and a support means 7. In Fig. 1, the drive element consists of a driving roller 5, but other drive elements, such as one or more drive wheels, can be used. The feeder belt is a so-called module belt 3, which refers to a belt consisting of a plurality of elements linked together. Even conventional conveyor belts can be used. The support means 7 has the shape of a sheet extending substantially horizontally and disposed to support the weight of the products which are placed on the module belt 3. The module belt 3 shown in Fig. 1 is driven by means of the drive roller 5, which is disposed at the front end of the shelf device 1. The shelf device 1 also comprises a hydraulic or pneumatic drive means 13 for driving the drive roller 5. The drive means 13 will be described in more detail below.

With regard to the control of the module belt 3, there are a number of ways of achieving satisfactory forward feed of the products placed thereon, the most simple of which involves the personnel manually activating the drive means 13 when they deem it necessary. Such a procedure is, however, not the most advantageous since it requires manual steps. One solution to this problem is to instead automatically activate, by means of a control unit, the drive means 13 at regular intervals, suitably based on an estimated product removal frequency for each individual shelf device 1. This will provide continuous refilling of the gaps appearing in the front row of products. In certain cases it can be desirable to activate the drive means 13 at every actual removal of a product, which requires arranging some form of detecting means. The shelf device 1 in Fig. 1 is provided with such a detecting means 15, which is arranged at the front portion of the shelf 1 and is joined to a control unit 17, e.g. a computer means, which activates the drive means 13 at, or a predetermined time after, receiving an activation signal from said detecting means 15. The detecting means 15 comprises photocells, placed above a module belt 3 at a suitable distance adapted to the products, at the front end of the belt, either to detect, in accordance with known technology, the removal of the entire front row of products, or to detect attempts to remove a single product from the module belt 3. This can occur when a light beam 23 (dashed line) generated by photocells being broken when the customer makes an attempt to remove the product. It is advantageous if a number of photocells are arranged above each other to cover a larger detection area.

Another type of detection means (not shown) comprises a fluid conductor, e.g. a hose, located parallel to and under/in front of the front row of products. The hose is filled with a fluid and is connected to a pressure meter. When a product is removed, which had previously exerted a pressure on the hose, there will be a drop in pressure in the hose which is sensed by the pressure meter, which sends an activation signal to a control unit. The control unit activates, via the fluid source 35, the drive means 13, which advances the rear rows of products until the position of the removed product is replaced by another product, the presence of which is detected by the pressure meter when the product presses against the hose. It is, of course, possible to install a number of hoses to cover a number of rows, and it is also possible to place the hoses so that they extend in another direction than parallel to the rows of products. Other types of detection means include doors and curtains which emit activation signals when they are moved in certain ways, or scales for detecting changes in weight.

In connection herewith there should also be mentioned the abutment 21 shown in Fig. 1. The function of this abutment 21 is to prevent products on the module belt 3 from falling off the belt when the module belt moves forward. It should be pointed out that such a abutment 21 is an alternative and is not always necessary, as will be more evident in the description below of the control of the shelf device 1.

One purpose of the present invention is, as was mentioned above, to provide a light-weight design for the shelf device 1, which makes it possible to utilize existing frames 25 to support the shelves. The mounting of the shelf device 1 in the frame 25 can be effected in a number of different ways, of which the most preferable is shown in Fig. 1. The support means 7 is provided here with vertical side walls 27, which are either made in one piece with the support means 7 or are fixed thereto, for example by point-welding. These side walls 27 can be fixed to the frame 25 in a number of different ways, for example by means of fasteners such as screws or nuts. An alternative solution (not shown) is to allow the shelf device 1 rest, via legs fixed to the support means 7, on a horizontal supporting sheet, fixed to the frame 25. In this way a design is achieved in which the shelf device 1 can be removed in a simple manner from, and be placed in, the frame 25. A similar function is achieved if the shelf device 1 is slideably mounted in the frame 25, for example if a horizontal bracket (not shown) in the frame 25 is provided with flanges or grooves in the horizontal plane, on or in which the support means 7 or its side walls 27 rest. Finally, it should be noted that it is, of course, not a requirement that the shelf device 1 be mounted in an existing frame 25. Rather, the shelf device 1 can be incorporated in a new frame 25 or be completely free-mounted.

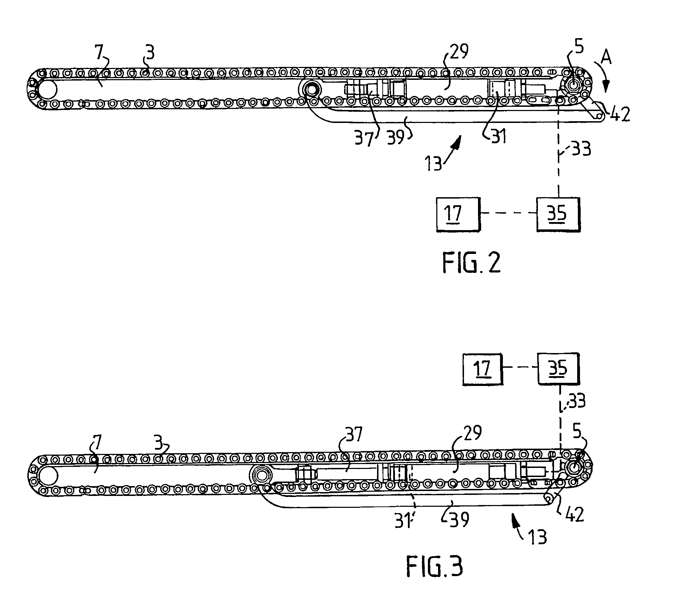

Below is a description of a first preferred embodiment of the hydraulic or pneumatic drive means 13 with references to Figs. 2 and 3. The drive means 13 comprises in this case a hollow cylinder 29, arranged substantially parallel to the module belt 3, and a piston 31 (dashed lines) reciprocally slideable in the cylinder 29. The interior of the cylinder 29 is connected at its front end to a fluid connection 33, which joins the cylinder 29 to a fluid source 35 controllable by the control unit 17. The piston 31 extends with its piston rod 37 out of the cylinder 29 at the rear end of the cylinder 29 and is joined at its rear portion with a linkage arm 39, which extends essentially parallel to the cylinder 29 towards the drive roller 5. The linkage arm 39 is joined to the drive roller 5 via a ratchet mechanism 42, which engages the drive roller 5 in such a manner that it is locked thereto only when the ratchet mechanism 42 is rotated in a first direction, as indicated by the arrow A. This means that only rotation of the ratchet mechanism 42 in the direction of the arrow A results in rotation of the drive roller, while the ratchet mechanism 42, when turning in the opposite direction, being free running relative to the drive roller 5. A more detailed description of how the engagement between the ratchet mechanism 42 and the drive roller 5 functions will not be given here, since the functioning of such mechanisms is known to the person skilled in the art, e.g. a conventional blocking range.

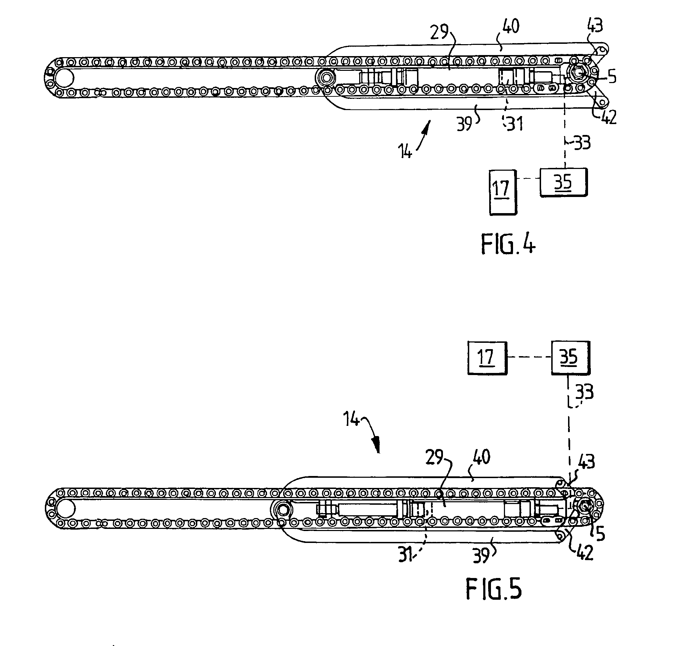

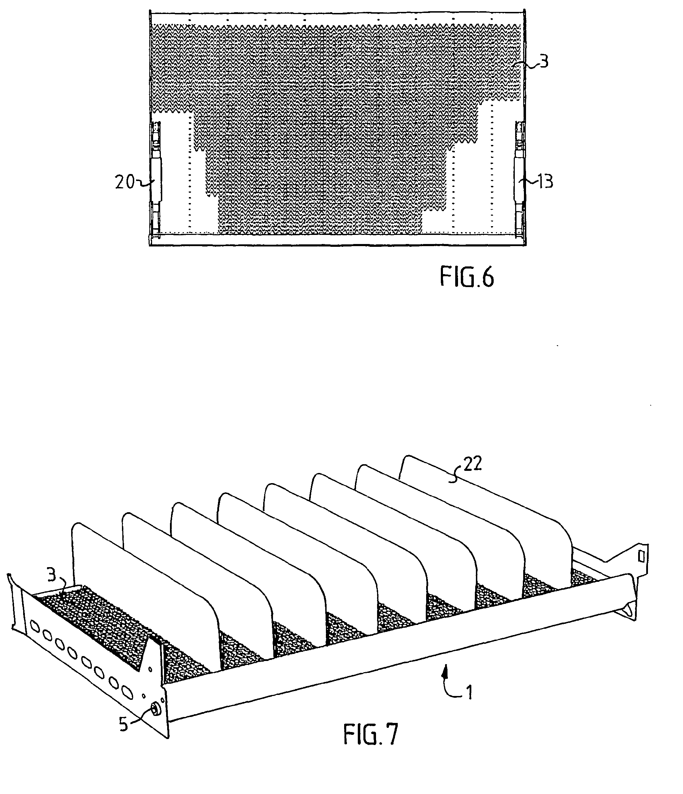

A second preferred embodiment of a drive means 14, shown in Figs. 4 and 5, comprises two linkage arms, a first 39 and a second 40, and first and second ratchet mechanisms 42, 43, which connect the first 39 and the second 40 linkage arms to the drive roller 5. The ratchet mechanisms 42, 43 are made so that the first ratchet mechanism 42 engages the drive roller 5 in order to achieve a drive roller rotation, as was described in connection with the first preferred embodiment of the drive means 13, the second ratchet mechanism 43 is released, and vice versa. The advantage of this second preferred embodiment is that, as will become more evident below, by effectively utilizing the piston movement, there is achieved both a more rapid forward feed and a lower consumption of fluid.

Below is a detailed description of the control of the shelf device 1 according to Fig. 1 provided with a drive means 13 according to the first preferred embodiment thereof, and a detection means 15 comprising photocells, which register an attempt to remove products. When the customer breaks the light beam 23, intending to remove a product, the detection means 15 emits an activation signal to the control unit 17, which activates the fluid source 35.

The fluid source 35 thereafter pumps, via the fluid connection 33, a fluid, e.g. compressed air or a pressure fluid, into the interior of the cylinder 29. As a result of the elevated pressure in the interior of the cylinder 29, the piston 31 performs an outwardly directed movement relative to the cylinder 29, which, via the piston rod 37 and the linkage arm 39 attached thereto, provides a rotational movement of the ratchet mechanism 42 connected to the linkage arm 39, which results in a drive roller rotation and thus advancing of the module belt 3. When said fluid in a conventional manner has left the cylinder 29 (e.g. via a valve), the cylinder 29 is displaced backward. How this is achieved depends on the type of cylinder 29 used. For a conventional cylinder with only one fluid connection, this is usually achieved by a spring acting against the piston in the cylinder, while, for a cylinder with two fluid connections, this can occur by the generation of an overpressure on the far side of the piston. This return movement is converted via the linkage arm 39 to a rotational movement of the blocking42, but without resulting in a drive roller rotation. The advancing of the module belt 3 is repeated at least until the empty gap on the module belt 3 has once again been filled with a product, which occurs after a predetermined time period, computed from the advancing speed and the size of the products and their placement on the modular belt 3. When using other forms of detection, the forward feed of the module belt 3 is suitably stopped when the detection means registers that the gap in the front row of products has been refilled.

The major difference between using a drive means 14 according to the second preferred embodiment, shown in Figs. 4 and 5, relative to the first preferred embodiment, is that in the second preferred embodiment, the first ratchet mechanism 42 rotates the drive roller 5 in the first direction when the piston 31 carries out its outwardly directed movement relative to the cylinder 29, while the second ratchet mechanism 43 rotates the drive roller 5 in the first direction during the return movement of the piston 31. In this manner there is achieved not only more rapid forward feed but also more effective utilisation of each piston stroke, which reduces the consumption of fluid.

As was mentioned above, it is advantageous if the advancing of the module belt 3 is interrupted after a predetermined period of time, to reduce the current consumption of the fluid source 35 and to avoid unnecessary wear both to the shelf device 1 and to the products placed thereon (by friction against the module belt 3, the abutment 21 and other products).

Furthermore, it is preferable if an ongoing advancing of the module belt 3 is interrupted when the photocell beam 23 is broken during said forward feed, to reduce the risk of pinching a customer, and for the same reason it is advantageous if the forward feed is initiated first after a predetermined period of time after the customer has broken the light-beam 23. Such a safety arrangement can also be achieved when using other types of detection means, for example by interrupting the forward feed when the pressure meter or the scale detects a rising pressure in the hose or an increase in weight, or when the door or curtain is opened, when the module belt is being driven.

A abutment 30 is not necessary if the forward feed is interrupted when the front row of products is filled, or if the shelf device 1 is manually controlled. In other cases, the abutment 21 is preferable to prevent products from falling off the module belt 3. It is advantageous in this case if the module belt 3 is manufactured of a material with low friction, e.g. plastic, which makes it possible for the module belt 3 to slip relative to the products which are stopped by the abutment 21 or other products.

As was mentioned above, it is advantageous if the feeder belt is a module belt 3, which is, in contrast to most conventional conveyor belts, not driven by means of friction but by the teeth of the drive roller 5 engaging the belt. This means that the module belt will not need to be tensioned about the drive roller 5 and the support means 7, which reduces the load thereon. At the same time it is possible to avoid slippage and undesirable lateral displacement of the module belt 3, which is a problem which is associated with the friction-driven conveyor belts (in the other case, as a result of the fact that the rollers, cambered for driving the conveyor belts, tend to sag). The toothed driving of the module belt 3, which is preferably strength and transversely by means of transverse rods, provides a forward feed which is more even transversely and thus straighter rows of products which are more attractive to the customer. Finally, the module belt 3, as a result of cavities in the same, is easier to clean and rinse off, which is important for hygiene, particularly if the products are foodstuffs or medicines.

For those cases where the module belt 3 has a width exceeding a predetermined value, it can be advantageous to arrange an additional drive means 20 at an opposite side of the drive roller 5 to the first drive means 13, firstly, to guarantee a transversely even forward feed, and, secondly, because the force required for forward feeding will be too great for a single drive means of suitable dimensions. Such a shelf device 1 is shown in Fig. 6, where portions of the module belt 3 have been removed to show the placement of the drive means 13, 20.

In Fig. 7, the shelf device 1 according to Fig. 1, has been provided with a number of dividers 22, the function of which is to separate the products from each other into a number of columns. In this way, the products will not engage each other during removal and forward feed.

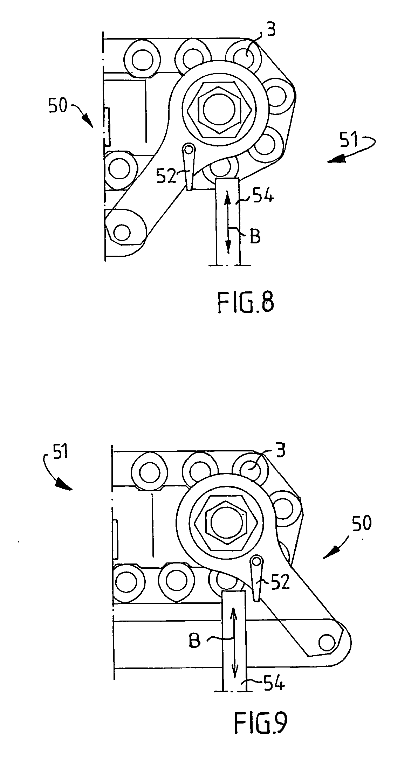

Figs. 8 and 9 show a detailed view of a ratchet mechanism 50 according to a third preferred embodiment of the drive means 51. The ratchet mechanism 50 comprises a switch 52, which controls the direction of drive of the module belt and can be set in two positions, a first in which a piston movement results in driving the module belt 3 in one direction forward and a second in which the piston movement results in driving the module belt 3 in a direction backward. Turning the switch 52 takes place by means of a blocking element 54 arranged near the drive roller 5. The blocking element 54, which is displaceable manually and/or automatically via a setting element (not shown) between a first position, in which it will not come into contact with the switch 52, and a second position in which it is in the path of the switch 52 (see arrow B). During the driving of the module belt 3, the blocking element 54 will thus be in the first position. For a first reversal of the direction of movement of the module belt 3, the blocking element 54 is moved to the second position (see Fig. 8), whereafter the following piston stroke will flip the switch 52 and thus reverse the locking direction between the ratchet mechanism 51 and the drive roller 5. The blocking element 54 is in the first position. For a first reversal of the direction of movement of the module belt 3, the blocking element 54 is moved to the second position (see Fig. 8) and the subsequent piston stroke causes the switch 52 to flip and thus reverse the direction of locking between the ratchet mechanism 51 and the drive roller 5. The blocking element 54 then returns to the first position. If one wishes to then reverse the locking direction once again, the blocking element 54 is returned to the second position, but in this case with the blocking element 54 now on the opposite side of the ratchet mechanism (see Fig. 9). In the subsequent piston stroke, the switch 52 will be flipped and change the direction of drive of the module belt 3, whereafter the blocking element 54 will return to the first position. The advantage of this embodiment is to facilitate placing products on the module belt 3 by virtue of the fact that the products can be placed on the front portion of the module belt 3 and then be automatically moved backwards. It is clearly evident that this third embodiment of the drive means 51 can also be combined with the second preferred embodiment.

Furthermore, it can also be advantageous if the module belt 3 can be driven at at least two different speeds, of which the most rapid is primarily intended to facilitate filling of the shelves by the personnel. This presupposes, of course, that manual control of the shelf device 1 is possible, preferably in combination with automatic control described above. For manual control of the shelf device 1 it is preferable that the drive means 13 will be automatically shut off by means of the control unit 17 after a predetermined time, if the personnel should forget to shut it off.

As regards choice of materials, it is advantageous if the module belt 3 is made of a plastic material with a low coefficient of friction and low density, while the other components of the shelf device 1 can be suitably made of stainless steel.

It is obvious to the person skilled in the art that the above described invention can be carried out in a number of different manners within the scope of protection defined in independent claim 1. For example, the drive roller can be arranged in any location along the module belt, and the drive means can be placed in another manner than what is described herein.

## Claims

1. Shelf device (1) for display and forward feed of products, comprising an endless feeder belt (3) disposed about at least a drive element (5) and at least a support means (7), on which belt the products can be placed, **characterized in that** the shelf device (1) comprises at least a pneumatic or hydraulic drive means (13, 14, 20 and 51) for stepped driving of the drive element (5), said drive means (13, 14, 20 and 51) comprising a cylinder (29) connected to a fluid source (35) via a fluid connection (33), and a piston (31) reciprocally disposed at least partially inside the cylinder (29), said piston being so joined to the drive element (5) via at least a linkage arm (39, 40) and a ratchet mechanism (42, 43) articulated thereto, that a piston movement in at least one direction causes a drive element (5) to rotate and thus drive the feeder belt (3).

2. Shelf device (1) according to claim 1, **characterized in that** it comprises two linkage arms (39, 40), each with a respective articulated ratchet mechanism (42, 43), where one linkage arm (39) and its ratchet mechanism (42) cause the drive element (5) to rotate upon an outward piston movement relative to the cylinder (29), while the other linkage arm (40) and its ratchet mechanism (43) cause the drive element (5) to rotate upon a retracting piston movement relative to the cylinder (29).

3. Shelf device (1) according to one of the preceding claims, **characterized in that** the feeder belt (3) is driveable in two opposite directions.

4. Shelf device (1) according to one of the preceding claims, **characterized in that** the drive element (5) is provided with teeth, which engage in the feeder belt (3) when driving it.

5. Shelf device (1) according to one of the preceding claims, **characterized in that** the feeder belt (3) is a module belt.

6. Shelf device (1) according to one of the preceding claims, **characterized in that** a abutment (21) is arranged at a forward portion of the feeder belt (3) and that the feeder belt (3) is made of a low-friction material to make slippage possible between the feeder belt (3) and the products placed thereon.

7. Shelf device (1) according to one of the preceding claims, **characterized by** at least one detection means (15) for detecting an attempt to remove a product disposed on the feeder belt (3), said detecting means (15) emitting an activation signal to the control unit (17), which activates the fluid source (35).

8. Shelf device (1) according to claim 7, **characterized in that** the control unit (17) deactivates the fluid source (35) after a predetermined period of time, calculated from the activation thereof.

9. Shelf device (1) according to one of claims 1-6, **characterized in that** at least one control unit (17) is connected to the drive means (13, 14, 20 and 51) and a detection means (15), said control unit (17) activating the drive means (13, 14, 20 and 51) upon reception of an activation signal from the detection means (15), said detection means (15) emitting the activation signal to the control unit (17) upon an attempt to remove a product disposed on the feeder belt (3).

## Patentansprüche

1. Regalvorrichtung (1) zur Auslage und zum Vorschub von Produkten, die ein endloses Zubringerband (3) aufweist, das um mindestens ein Antriebselement (5) und mindestens eine Stützeinrichtung (7) angeordnet ist, wobei die Produkte auf dem Band angeordnet werden können, **dadurch gekennzeichnet, daß** die Regalvorrichtung (1) mindestens eine pneumatische oder hydraulische Antriebseinrichtung (13, 14, 20 und 51) zum schrittweisen Antreiben des Antriebselements (5) aufweist, wobei die Antriebseinrichtung (13, 14, 20 und 51) einen Zylinder (29), der über eine Fluidverbindung (33) mit einer Fluidquelle (35) verbunden ist, und einen Kolben (31) aufweist, der mindestens teilweise innerhalb des Zylinders (29) hin- und herbeweglich angeordnet ist, wobei der Kolben so mit dem Antriebselement (5) über mindestens einen Verbindungsarm (39, 40) und einen daran gelenkig angebrachten Ratschenmechanismus (42, 43) verbunden ist, daß eine Kolbenbewegung in mindestens eine Richtung bewirkt, daß sich ein Antriebselement (5) dreht und folglich das Zubringerband (3) antreibt.

2. Regalvorrichtung (1) nach Anspruch 1, **dadurch gekennzeichnet, daß** sie zwei Verbindungsarme (39, 40) aufweist, jeweils mit einem gelenkig angebrachten Ratschenmechanismus (42, 43), wobei ein Verbindungsarm (39) und sein Ratschenmechanismus (42) bewirken, daß sich bei einer Kolbenbewegung relativ zum Zylinder (29) nach außen das Antriebselement (5) dreht, während der andere Verbindungsarm (40) und sein Ratschenmechanismus (43) bewirken, daß sich bei einer einziehenden Kolbenbewegung relativ zum Zylinder (29) das Antriebselement (5) dreht.

3. Regalvorrichtung (1) nach einem der vorhergehenden Ansprüche, **dadurch gekennzeichnet, daß** das Zubringerband (3) in zwei entgegengesetzte Richtungen antriebsfähig ist.

4. Regalvorrichtung (1) nach einem der vorhergehenden Ansprüche, **dadurch gekennzeichnet, daß** das Antriebselement (5) mit Zähnen versehen ist, die in das Zubringerband (3) eingreifen, wenn es angetrieben wird.

5. Regalvorrichtung (1) nach einem der vorhergehenden Ansprüche, **dadurch gekennzeichnet, daß** das Zubringerband (3) ein Modulband ist.

6. Regalvorrichtung (1) nach einem der vorhergehenden Ansprüche, **dadurch gekennzeichnet, daß** ein Anschlag (21) an einem vorderen Abschnitt des Zubringerbands (3) angeordnet ist und daß das Zubringerband (3) aus einem reibungsarmen Material besteht, um einen Schlupf zwischen dem Zubringerband (3) und den darauf angeordneten Produkten möglich zu machen.

7. Regalvorrichtung (1) nach einem der vorhergehenden Ansprüche, **gekennzeichnet durch** mindestens eine Erfassungseinrichtung (15) zur Erfassung eines Versuchs, ein auf dem Zubringerband (3) angeordnetes Produkt zu entnehmen, wobei die Erfassungseinrichtung (15) ein Einschaltsignal an die Steuereinheit (17) abgibt, das die Fluidquelle (35) einschaltet.

8. Regalvorrichtung (1) nach Anspruch 7, **dadurch gekennzeichnet, daß** die Steuereinheit (17) die Fluidquelle (35) nach einer vorgegebenen Zeitspanne ausschaltet, die von deren Einschalten berechnet wird.

9. Regalvorrichtung (1) nach einem der Ansprüche 1-6, **gekennzeichnet durch** mindestens eine Steuereinheit (17), die mit der Antriebseinrichtung (13, 14, 20 und 51) verbunden ist, und einer Erfassungseinrichtung (15), wobei die Steuereinheit (17) die Antriebseinrichtung (13, 14, 20 und 51) beim Empfang eines Einschaltsignals von der Erfassungseinrichtung (15) einschaltet, wobei die Erfassungseinrichtung (15) das Einschaltsignal an die Steuereinheit (17) bei einem Versuch abgibt, ein auf dem Zubringerband (3) angeordnetes Produkt zu entnehmen.

## Revendications

1. Dispositif d'étagère (1) pour la présentation et l'alimentation de produits, comprenant une courroie d'alimentation sans fin (3) disposée autour d'au moins un élément d'entraînement (5) et d'au moins un moyen de support (7), sur laquelle les produits peuvent être placés, **caractérisé en ce que** le dispositif d'étagère (1) comprend au moins un moyen d'entraînement pneumatique ou hydraulique (13, 14, 20 et 51) pour l'entraînement étagé de l'élément d'entraînement (5), ledit moyen d'entraînement (13, 14, 20 et 51) comprenant un cylindre (29) relié à une source de fluide (35) par l'intermédiaire d'une connexion fluidique (33) et un piston (31) disposé au moins partiellement à l'intérieur du cylindre (29), ledit piston étant relié à l'élément d'entraînement (5) par l'intermédiaire d'au moins un bras de liaison (39, 40) et un mécanisme à cliquet (42, 43) articulé par rapport à celui-ci, de façon à ce qu'un mouvement du piston dans au moins une direction provoque la rotation de l'élément d'entraînement (5) et entraîne donc la courroie d'alimentation (3).

2. Dispositif d'étagère (1) selon la revendication 1, **caractérisé en ce qu'**il comprend deux bras de liaison (39, 40), chacun étant muni d'un mécanisme à cliquet articulé (42, 43), un bras de liaison (39) et son mécanisme à cliquet (42) provoquant la rotation de l'élément d'entraînement (5) lors d'un mouvement du piston vers l'extérieur par rapport au cylindre (29) et l'autre bras de liaison (40) et son mécanisme à cliquet (43) provoquant la rotation de l'élément d'entraînement (5) lors d'un mouvement de rétraction du piston par rapport au cylindre (29).

3. Dispositif d'étagère (1) selon l'une des revendications précédentes, **caractérisé en ce que** la courroie d'alimentation (3) peut être entraînée dans deux directions opposées.

4. Dispositif d'étagère (1) selon l'une des revendications précédentes, **caractérisé en ce que** l'élément d'entraînement (5) est muni de dents qui s'engrènent avec la courroie d'alimentation (3) lors de son entraînement.

5. Dispositif d'étagère (1) selon l'une des revendications précédentes, **caractérisé en ce que** la courroie d'alimentation (3) est une courroie modulaire.

6. Dispositif d'étagère (1) selon l'une des revendications précédentes, **caractérisé en ce qu'**un appui (21) se trouve au niveau d'une portion avant de la courroie d'alimentation (3) et **en ce que** la courroie d'alimentation (3) est constituée d'un matériau à faible coefficient de friction afin de permettre un glissement entre la courroie d'alimentation (3) et les produits placés dessus.

7. Dispositif d'étagère (1) selon l'une des revendications précédentes, **caractérisé par** au moins un moyen de détection (15) permettant de détecter une tentative de retirer un produit disposé sur la courroie d'alimentation (3), ledit moyen de détection (15) émettant un signal d'activation vers l'unité de contrôle (17) qui active la source de fluide (35).

8. Dispositif d'étagère (1) selon la revendication 7, **caractérisé en ce que** l'unité de contrôle (17) désactive la source de fluide (35) après un laps de temps prédéterminé, calculé à partir de son activation.

9. Dispositif d'étagère (1) selon l'une des revendications 1 à 6, **caractérisé en ce qu'**au moins une unité de contrôle (17) est reliée au moyen d'entraînement (13, 14, 20 et 51) et à un moyen de détection (15), ladite unité de contrôle (17) activant le moyen d'entraînement (13, 14, 20 et 51) lors de la réception d'un signal d'activation provenant du moyen de détection (15), ledit moyen de détection (15) émettant le signal d'activation vers l'unité de contrôle (17) lors d'une tentative de retirer un produit disposé sur la courroie d'alimentation (3).
